# EUROPÄISCHE PATENTSCHRIFT

(11) **EP 1 925 354 B1**
(45) Veröffentlichungstag und Bekanntmachung des Hinweises auf die Patenterteilung: **29.08.2012**
(21) Anmeldenummer: 07115253.2
(22) Anmeldetag: 30.08.2007
(51) Int. Cl.: B01D 53/90, F01N 3/20, F02M 55/00

(54) **Katalytische Reduktionseinrichtung**
Catalytic reduction device
Dispositif de réduction catalytique

(30) Priorität: 27.10.2006 DE 102006050807
(43) Veröffentlichungstag der Anmeldung: 28.05.2008
(73) Patentinhaber: ROBERT BOSCH GMBH, 70442 Stuttgart (DE)
(72) Erfinder: Strauch, Armin, 71701, Schwieberdingen (DE); Gansel, Rainer, 74392, Freudental (DE); Wuest, Andreas, 70567, Stuttgart-Moehringen (DE)

(56) Entgegenhaltungen:
- WO-A-03/016687
- DE-U1- 20 119 512

## Beschreibung

Die Erfindung betrifft eine katalytische Reduktionseinrichtung für eine katalytische Reduktion von Stickoxiden in Abgasanlagen, insbesondere für Kraftfahrzeuge, mit einem Reduktionsmitteltank und einer Reduktionsmittel-Fördereinrichtung.

### Stand der Technik

Katalytische Reduktionseinrichtungen der eingangs genannten Art sind aus dem Stand der Technik bekannt. Dabei wird aus einem Vorratstank eine wässrige Harnstofflösung mittels einer Förderpumpe zu einem Dosiermodul gepumpt. Dort wird es in der angeforderten Menge in das Abgas einer Brennkraftmaschine eines Kraftfahrzeugs gespritzt, wobei die wässrige Harnstofflösung zerfällt und Ammoniak als Reduktionsgas freigibt. In einem im Abgasstrang folgenden SCR-Katalysator (SCR = Selective Catalytic Reduction) wirkt das Reduktionsgas auf NOx reduzierend, sodass sich Abgasgrenzwerte für NOx einhalten lassen. Für mit Dieselkraftstoff betriebene Fahrzeuge ist dies aufgrund der in den nächsten Jahren anstehenden verschärften Abgasgesetzgebung von hoher Bedeutung. In gleicher Weise gilt dies auch bei einer kompakten Integration für Fahrzeuge mit einem Ottomotor.

Bisher werden Einzelkomponenten der Reduktionsmittel-Fördereinrichtung, wie zum Beispiel die Förderpumpe, Heizelemente und Leitungen separat im Fahrzeug angebracht. Dies ermöglicht zwar eine hohe Flexibilität, führt jedoch dazu, dass zahlreiche kundenspezifische Varianten entstehen, und somit ein erhöhter Aufwand in Applikation und Absicherung der Funktionalität notwendig ist. Darüber hinaus ist bei niedrigen Temperaturen ein Einfrieren der Einzelkomponenten möglich, sodass auch für diese Komponenten Heizstufen vorgesehen sind, sodass diese Komponenten aufgetaut beziehungsweise beheizt werden, wodurch ein Betrieb der Reduktionseinrichtung ermöglicht wird.

Aus der DE 201 19 512 ist es bekannt, einen Tank mit der von einer Kraftstoffrücklaufleitung abgestrahlten Wärme zu beheizen.

### Offenbarung der Erfindung

Erfindungsgemäß ist vorgesehen, dass die Reduktionsmittel-Fördereinrichtung zumindest teilweise im und/oder unmittelbar am Reduktionsmitteltank angeordnet ist. Dadurch ergibt sich eine kompakte Lösung für die Reduktionseinrichtung, die einen einheitlichen Einbau in unterschiedliche Kraftfahrzeuge ermöglicht. Insgesamt werden dabei weniger Einzelkomponenten, wie beispielsweise Leitungen, benötigt und die katalytische Reduktionseinrichtung ist robuster gestaltbar. Dadurch, dass die Reduktionsmittel-Fördereinrichtung im und/oder unmittelbar am Reduktionsmitteltank angeordnet ist, wird ein besonders kurzes Gesamtleitungssystem ermöglicht, da beispielsweise eine Leitung von dem Reduktionsmitteltank zu der Reduktionsmittel-Fördereinrichtung entfällt. Darüber hinaus ist aufgrund der kompakten Lösung ein (energie-)effizientes Beheizen der Reduktionsmittel-Fördereinrichtung möglich. Ist die Reduktionsmittel-Fördereinrichtung vorteilhafterweise in dem Reduktionsmitteltank angeordnet, so ist sie unter Anderem auch vor Beschädigungen durch einen Steinschlag oder Ähnlichem geschützt.

Dabei ist die Reduktionsmittel-Fördereinrichtung zumindest bereichsweise in einem Eisschutzkäfig angeordnet, der eine Beschädigung der Reduktionsmittel-Fördereinrichtung durch gefrorenes Reduktionsmittel, beispielsweise in Form von Eisbrocken, verhindert.

Dabei ist die Reduktionsmittel-Fördereinrichtung von einer Heizung umgeben. Auf eine zusätzliche Beheizung der Saugleitung, wie es im Stand der Technik notwendig ist, kann verzichtet werden, da diese bei der erfindungsgemäßen katalytischen Reduktionseinrichtung nicht oder nur ansatzweise existiert. Es kann somit auf eine zusätzliche Heizeinrichtung verzichtet werden, was Kosten- und den Applikationsaufwand verringert. Darüber hinaus sinkt der Gesamtheizstrombedarf. Die Heizung ist dabei vorteilhafter Weise als Heizwendel oder -spirale ausgeführt, die die Reduktionsmittel-Fördereinrichtung zumindest bereichsweise umgibt, wobei die Heizwendel beziehungsweise die Heizspirale derart gestaltet ist, dass sie den Eisschutzkäfig bildet.

Vorteilhafterweise weist die Reduktionsmittel-Fördereinrichtung eine Förderpumpe, insbesondere eine elektrische Förderpumpe auf. Ist die Förderpumpe vorteilhafterweise an der tiefsten Stelle beziehungsweise im Fußbereich des Reduktionsmitteltanks angeordnet, so ist kein Ansaugdruck notwendig, da das in dem Reduktionsmitteltank befindliche Reduktionsmittel selbstständig in die Förderpumpe einströmt. Ist als Förderpumpe vorteilhafterweise eine Tauchpumpe im Reduktionsmitteltank vorgesehen, so müsste diese nicht unbedingt abgedichtet sein, wodurch Konstruktions-, Montage- und Prüfaufwand verringert werden. Alternativ dazu ist die Förderpumpe unmittelbar an dem Reduktionsmitteltank, beispielsweise auf der Außenseite des Reduktionsmitteltanks im Fußbereich angebracht. Um eine Verbindung zu dem im Reduktionsmitteltank befindlichen Reduktionsmittel zu erhalten, ist eine kurze Saugleitung durch die Seitenwand des Reduktionsmitteltanks vorgesehen.

Zweckmäßigerweise weist die Reduktionsmittel-Fördereinrichtung mindestens ein Reduktionsmittel-Filter auf, wobei das Reduktionsmittel-Filter entweder der Förderpumpe vorgeschaltet, also saugseitig angeordnet, oder nachgeschaltet, also druckseitig angeordnet, ist. Dieses hat den Vorteil, dass Druckpulsationen auf der Druckseite geringer ausfallen. Hierbei kann auch vorteilhafterweise ein zweites Reduktionsmittel-Filter saugseitig als Vor-Filter angeordnet sein. Durch die Anordnung der Förderpumpe an der tiefsten Stelle beziehungsweise im Fußbereich ist die katalytische Reduktionseinrichtung auch in großen Betriebshöhen und unter warmen Betriebsbedingungen einsetzbar, da eine Blasenentstehung beziehungsweise Kavitation vermieden wird. Durch die Anordnung an der tiefsten Stelle ist darüber hinaus eine große Fördermenge möglich, wohingegen bei einer Reduktionseinrichtung aus dem Stand der Technik ein saugseitiger Filter einen Drucknachlass verursachen würde und damit die Fördermenge begrenzt und damit die Höhentauglichkeit des Systems vermindert wäre. Das Filter ist auch auf der Druckseite, also der Förderpumpe nachgeschaltet, anordenbar. Ebenso ist eine flache Installation möglich, wobei der Filter im Reduktionsmitteltank neben der Förderpumpe angeordnet ist. Weiterhin ist vorgesehen, dass das Filter um die Förderpumpe herum legbar ist. Auf einen Vorfilter kann dabei verzichtet werden. Das Filter kann dabei ebenso wie die Förderpumpe in dem Reduktionsmitteltank oder unmittelbar am Reduktionsmitteltank, also auf der Außenseite des Reduktionsmitteltanks, angeordnet sein.

Zweckmäßigerweise ist die Reduktionsmittel-Fördereinrichtung an ein Reduktionsmittel-Leitungssystem angeschlossen, um das Reduktionsmittel an eine gewünschte Stelle zu fördern. Vorteilhafterweise weist das Reduktionsmittel-Leitungssystem eine Reduktionsmittel-Förderleitung und/oder eine Reduktionsmittel-Rückführleitung auf. Über die Reduktionsmittel-Förderleitung wird das Reduktionsmittel zu einem Dosiermodul gepumpt, welches das Reduktionsmittel in der angeforderten Menge in das Abgas der

Brennkraftmaschine spritzt. Da ein Reduktionsmittel unterhalb einer bestimmten Temperatur gefriert, müssen gefrierempfindliche Komponenten von dem Reduktionsmittel entleert und durch Luft ersetzt werden. Dies geschieht vorteilhafterweise dadurch, dass durch das Dosiermodul Abgas in die Reduktionsmittel-Förderleitung gesaugt wird, oder indem das Reduktionsmittel über die Reduktionsmittel-Rückführleitung in den Reduktionsmitteltank zurückgeführt wird.

Zweckmäßigerweise ist die Reduktionsmittel-Fördereinrichtung an eine elektrische Versorgungsleitung für die Förderpumpe angeschlossen, sodass diese mit Strom versorgt werden kann. Ist die Förderpumpe unmittelbar am Reduktionsmitteltank angebracht, so ist die elektrische Versorgungsleitung problemlos anschließbar. Bei einer Anordnung der Förderpumpe in dem Reduktionsmitteltank muss jedoch auf eine entsprechende Isolierung der Versorgungsleitung geachtet werden, da diese durch das Reduktionsmittel geführt wird.

Vorteilhafterweise ist die Heizung eine Kühlwasserheizung der Brennkraftmaschine des Kraftfahrzeugs. So bildet vorteilhafterweise eine Kühlwasserleitung der Kühlwasserheizung die Heizung. Dabei wird zum Einen der Reduktionsmitteltank und die Reduktionsmittel-Fördereinrichtung beheizt, wobei keine zusätzliche elektrische Pumpenheizung notwendig ist, wodurch eine zusätzliche Heizeinrichtung, elektrische Anschlussleitungen sowie Heizstrombedarf eingespart wird. Da durch das von der Brennkraftmaschine erhitzte Kühlwasser der Kühlwasserheizung mehr Energie zur Verfügung steht als bei einem elektrischen Heizkonzept, kann die Reduktionsmittel-Fördereinrichtung und/oder der Reduktionsmitteltank schneller aufgetaut werden. Dadurch ist eine schnellere Betriebsbereitschaft ermöglicht, was nach einem Kaltstart der Brennkraftmaschine zu einer früheren NOx-Konvertierung führt. Eine Abgasvorgabe kann somit leichter erreicht werden. Die Kühlwasserleitung bildet dabei vorteilhafterweise den Heizwendel beziehungsweise die Heizspirale. Vorteilhafterweise führt ein Abschnitt der Kühlwasserleitung durch die Reduktionsmittel-Fördereinrichtung, um ein schnelleres Auftauen dieser zu ermöglichen.

Weiterhin ist vorgesehen, dass die Reduktionsmittel-Fördereinrichtung an einem Verschlusselement des Reduktionsmitteltanks angeordnet ist. Dadurch kann die gesamte Reduktionsmittel-Fördereinrichtung durch Lösen des Verschlusselements von dem Reduktionsmitteltank entfernt werden. Dadurch ist die Reduktionsmittel-Fördereinrichtung einfach zugänglich und kann leicht gewartet werden. Darüber hinaus ist eine einfache Entlüftung des hydraulischen Systems vereinfacht, wodurch Dosiermengentoleranzen des Reduktionsmittels verringert werden.

Vorteilhafterweise ist das Verschlusselement am Kopfbereich oder am Seitenbereich des Reduktionsmitteltanks angeordnet. Durch eine Anordnung am Kopfbereich sind Wartungs- und Servicearbeiten besonders einfach durchzuführen. Ist das Verschlusselement am Seitenbereich angeordnet, so ist die Reduktionsmittel-Fördereinrichtung vorzugsweise zumindest teilweise unmittelbar an dem Reduktionsmitteltank beziehungsweise dem Verschlusselement auf der Außenseite angeordnet. Insbesondere ist die Förderpumpe außen angeordnet, sodass elektrische Versorgungsleitungen extern, also außen am Reduktionsmitteltank verlegbar sind.

Weiter ist vorgesehen, dass das Verschlusselement als Tankdeckel des Reduktionsmitteltanks ausgebildet ist, wobei dieser vorteilhafterweise am Kopfbereich angeordnet ist. Damit wird eine Schnittstellen-Einheit für Reduktionsmittel, Heizung und elektrische Verbindungen realisiert.

Vorteilhafterweise weist die Reduktionsmittel-Fördereinrichtung einen Reduktionsmitteltank-Temperatursensor auf, mit dem die Temperatur des Reduktionsmittels überprüft werden kann.

Vorteilhafterweise weist die Reduktionsmittel-Fördereinrichtung einen Tankfüllsensor auf, der Aufschluss über den Füllstand des Reduktionsmitteltanks gibt.

Nach einer Weiterbildung der Erfindung ist die Reduktionsmittel-Fördereinrichtung als Modul ausgebildet, welches die Förderpumpe, das Verschlusselement, die Heizung, den Reduktionsmittel-Temperatursensor und/oder den Reduktionsmitteltank-Füllsensor umfasst. Die Reduktionsmittel-Fördereinrichtung kann somit beispielsweise in unterschiedliche Reduktionsmitteltanks, je nach Kraftfahrzeug, eingebracht werden. Dadurch wird der Montage- und Konstruktionsaufwand erheblich verringert.

Zweckmäßigerweise ist zur Regelung des Förderdrucks in oder an der Reduktionsmittel-Fördereinrichtung ein Drucksensor vorgesehen. Dieser kann alternativ dazu auch in dem Dosiermodul vorgesehen sein. Das Signal des Drucksensors ermöglicht es außerdem, Dosiertoleranzen bei Druckschwingung zu verbessern.

Vorteilhafterweise sind die Abmessungen der Reduktionsmittel-Fördereinrichtung derart ausgebildet, dass die Reduktionsmittel-Fördereinrichtung eine, vom Verschlusselement verschließbare Reduktionsmitteltank-Öffnung zumindest teilweise passieren kann. Dadurch wird die Montage und die Wartung der Reduktionsmittel-Fördereinrichtung wesentlich erleichtert.

### Kurze Beschreibung der Zeichnungen

Im Folgenden soll die Erfindung anhand einiger Figuren näher erläutert werden. Dazu zeigen im Folgenden
- Figur 1: eine katalytische Reduktionseinrichtung,
- Figur 2: ein erstes Ausführungsbeispiel einer erfindungsgemäßen katalytischen Reduktionseinrichtung und
- Figur 3: ein zweites Ausführungsbeispiel einer erfindungsgemäßen katalytischen Reduktionseinrichtung.

### Ausführungsform(en) der Erfindung

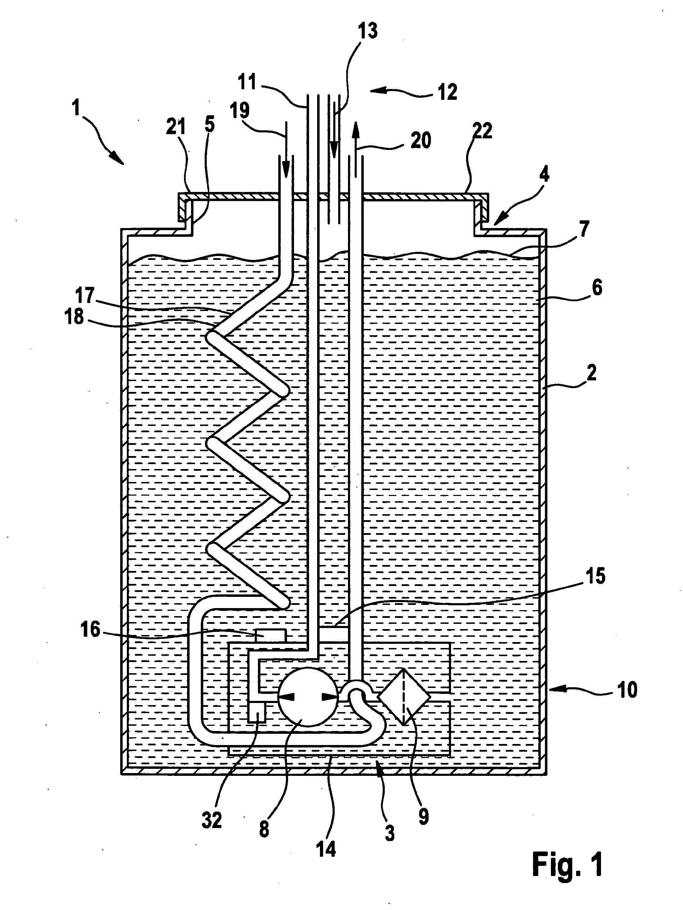

Die Figur 1 zeigt in einer schematischen Darstellung eine katalytische Reduktionsmitteleinrichtung 1 mit einem Reduktionsmitteltank 2 und einer Reduktionsmittel-Fördereinrichtung 3. Der Reduktionsmitteltank 2 weist an seinem Kopfbereich 4 eine Reduktionsmitteltank-Öffnung 5 auf und ist mit einem Reduktionsmittel 6 gefüllt, wobei eine gewellte Linie 7 im Kopfbereich 4 den Füllstand des Reduktionsmittels 6 andeutet.

Die Reduktionsmittel-Fördereinrichtung 3 weist eine elektrische Förderpumpe 8 und ein Filter 9 auf, die nebeneinander im Fußbereich 10 des Reduktionsmitteltanks 2 angeordnet sind, sodass sie sich im tiefsten Bereich des Reduktionsmitteltanks 2 befinden. Von der Förderpumpe 8 führt eine Reduktionsmittelförderleitung 11 eines Reduktionsmittel-Leitungssystems 12 zu einem hier nicht dargestellten Dosiermodul. Zu dem Reduktionsmittel-Leitungssystem 12 gehört ebenfalls eine Reduktionsmittel-Rückführleitung 13, die von dem hier nicht dargestellten Dosiermodul in den Reduktionsmitteltank 2 führt.

Die Förderpumpe 8 und das Reduktionsmittel-Filter 9 sind größtenteils von einem Eisschutzkäfig 14 umgeben, der die Förderpumpe 8 und das Filter 9, beispielsweise vor gefrorenen Reduktionsmittel-Eisblöcken, schützt. Die Reduktionsmittel-Fördereinrichtung 3 weist weiterhin einen Reduktionsmittel-Temperatursensor 15 auf, der die Temperatur des Reduktionsmittels 6 erfasst. Darüber hinaus ist der Reduktionsmittel-Fördereinrichtung 3 ebenfalls ein Reduktionsmitteltank-Füllstandsensor 16 zugeordnet, der den Reduktionsmittel-Füllstand, gekennzeichnet durch die Linie 7, erfasst, so dass gegebenenfalls, bei einem zu niedrigen Füllstand, beispielsweise ein Warnsignal gegeben werden kann. Zusätzlich ist ein Drucksensor 32 zur Regelung des Förderdrucks der Reduktionsmittel-Fördereinrichtung 3 vorgesehen, wodurch außerdem eine Dosiertoleranz der Einspritzmenge des Dosiermoduls bei Druckschwingungen verbessert werden kann.

Durch den Reduktionsmitteltank 2 führt außerdem eine Kühlwasserleitung 17 einer Kühlwasserheizung 18 einer Brennkraftmaschine des Kraftfahrzeugs, wobei die Kühlwasserleitung 17 einen Einlauf 19 und einen Auslauf 20 aufweist, die beide im Kopfbereich 4 des Reduktionsmitteltanks 2 angeordnet sind. Die Kühlwasserleitung 17 verläuft dabei teilweise durch die Reduktionsmittel-Fördereinrichtung 3.

Die Reduktionsmitteltank-Öffnung 5 wird von einem als Tankdeckel 21 ausgebildeten Verschlusselement 22 verschlossen. Die Kühlwasserleitung 17 und die Reduktionsmittelförderleitung 11 sowie die Reduktionsmittelrückführleitung 13 führen dabei durch den Tankdeckel 21. Ebenfalls führen durch den Tankdeckel 21 hier nicht dargestellte elektrische Leitungen zu der Förderpumpe 8. Vorteilhafterweise ist die Reduktionsmittel-Fördereinrichtung 3, bevorzugt mit dem Verschlusselement, als Modul ausgebildet, sodass die gesamte Reduktionsmittel-Fördereinrichtung 3 einfach aus dem Reduktionsmitteltank 2 genommen und zum Beispiel gewartet werden kann. Im Betrieb strömt durch die Kühlwasserleitung 17 von der Brennkraftmaschine erhitztes Kühlwasser, wodurch sowohl das Reduktionsmittel 6 in dem Reduktionsmitteltank 2 als auch die Reduktionsmittel-Fördereinrichtung 3 beheizt wird. Durch die Verwendung des erhitzten Kühlwassers kann das Reduktionsmittel 6 beziehungsweise die Reduktionsmittel-Fördereinrichtung 3 besonders schnell beheizt werden, sodass ein sehr schnelles Auftauen möglich ist. Die Förderpumpe 8 fördert uni- oder bidirektional das Reduktionsmittel 6, welches in dem hier dargestellten Ausführungsbeispiel durch das Filter 9 in die Förderpumpe 8 gelangt, zu dem Dosiermodul, welches eine angeforderte Menge in ein Abgassystem der Brennkraftmaschine des Kraftfahrzeugs spritzt, sodass in dem Abgas enthaltene NOx-Anteile reduziert werden. Da sich die Förderpumpe 8 in dem Reduktionsmitteltank 2 befindet, ist keine Saugleitung zu der Förderpumpe 8 notwendig, welche zusätzlich beheizt werden müsste. Vorteilhafterweise ist die Förderpumpe 8 dabei als Tauchpumpe ausgebildet, sodass die Förderpumpe 8 nicht unbedingt dicht ausgebildet sein muss.

Um bei tiefen Temperaturen ein Einfrieren des Reduktionsmittels 6 in dem Reduktionsmittelleitungssystem 12 zu verhindern, wird vorteilhafterweise, im nicht betriebenen Zustand, entweder das Reduktionsmittel durch die Fördermittelrücklaufleitung 13 zurückgeführt oder, für den Fall dass nur die Reduktionsmittelförderleitung 11 vorgesehen ist, durch das Dosiermodul Abgas in die Reduktionsmittel-Förderleitung 11 gesaugt, wodurch in beiden Fällen die gefrierempfindlichen Leitungen und das Dosiermodul von dem Reduktionsmittel entleert werden.

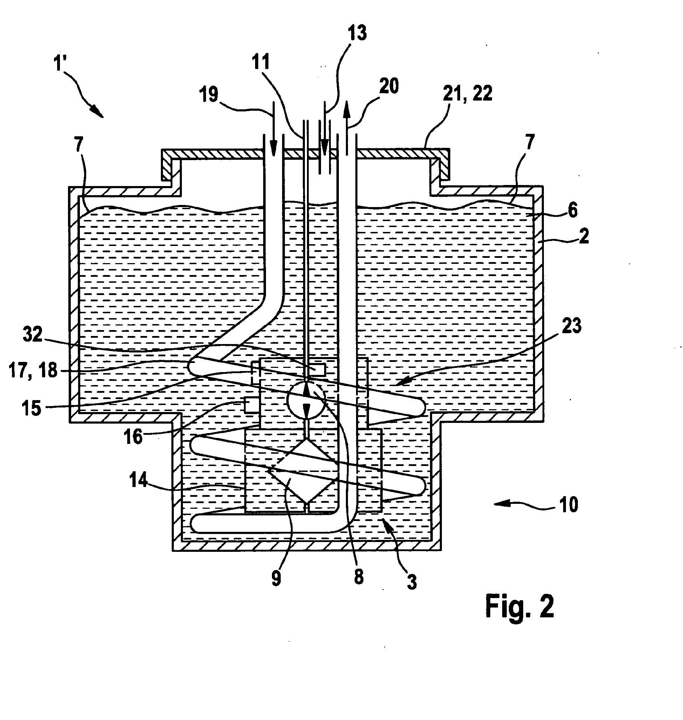

Die Figur 2 zeigt in einem ersten Ausführungsbeispiel eine Variation der in der Figur 1 gezeigten katalytischen Reduktionseinrichtung 1, wobei Elemente in der Figur 2 den Elementen in der Figur 1 entsprechen und mit dem gleichen Bezugszeichen versehen sind. In der hier dargestellten Ausführungsform weist der Reduktionsmitteltank 2 einer Reduktionseinrichtung 1' einen verjüngten Fußbereich 10 auf, der die Reduktionsmittel-Fördereinrichtung 3 zumindest bereichsweise aufnimmt. Die Reduktionsmittel-Fördereinrichtung 3 ist hierbei derart angeordnet, dass das Filter 9 unter der Förderpumpe 8 angeordnet ist und die Kühlwasserleitung 17 in einer Spirale 23 gewendelt um die Reduktionsmittel-Fördereinrichtung 3 verläuft, sodass die Reduktionsmittel-Fördereinrichtung 3 von einer Heizung 24, die durch die gewendelte Kühlwasserleitung 17 gebildet wird, umgeben ist. Dadurch wird die Wärme des durch die Kühlwasserleitung 17 strömenden Kühlwassers effizient für die Beheizung des Reduktionsmitteltanks 2 und der Reduktionsmittel-Fördereinrichtung 3 genutzt. Dadurch, dass die ReduktionsmittelFörderleitung 11 und die Reduktionsmittel-Rückführleitung 13 entlang der Kühlwasserleitung 17 geführt sind, werden auch diese besonders schnell erwärmt. Die Verjüngung im Fußbereich 10 führt vorteilhaft dazu, dass sich im Fußbereich das Reduktionsmittel 6 schneller erwärmen und damit, falls es gefroren war, schneller auftauen kann. Zudem kann der Reduktionsmitteltank 2 effektiver entleert werden, sodass nur eine kleinste Restmenge übrig bleibt

Darüber hinaus dient die Verjüngung im Fußbereich 10 auch dazu, dass das Reduktionsmittel 6 dem Filter 9 selbstständig zuläuft.

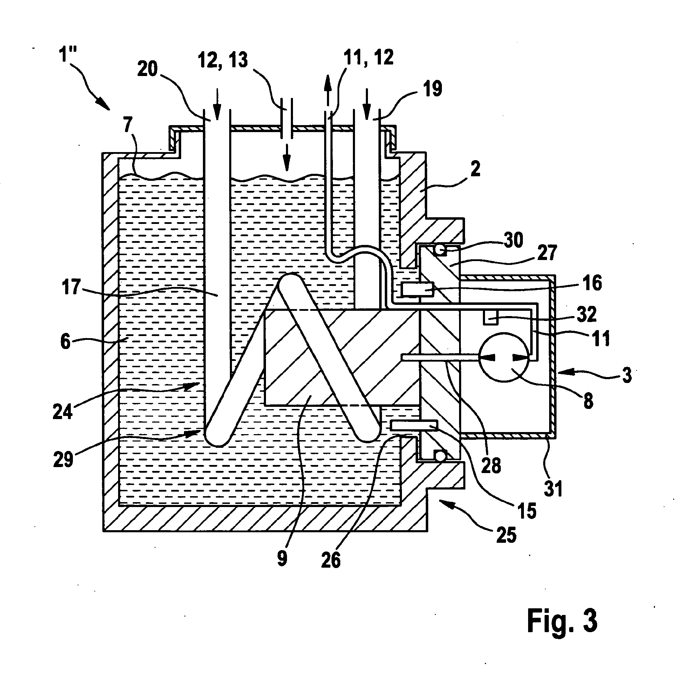

Die Figur 3 zeigt ein zweites Ausführungsbeispiel einer erfindungsgemäßen katalytischen Reduktionseinrichtung 1", wobei hier das Verschlusselement 22 am Seitenbereich 25 des Reduktionsmitteltanks 2 angeordnet ist. Die Förderpumpe 8 ist dabei außerhalb von dem Reduktionsmitteltank 2 unmittelbar am Reduktionsmitteltank 2 angeordnet. In diesem Ausführungsbeispiel weist der Reduktionsmitteltank 2 dazu eine Reduktionsmitteltanköffnung 26 im Seitenbereich 25 auf, die von einem Verschlusselement 27 verschlossen wird. An dem Verschlusselement 27 ist die Förderpumpe 8 außerhalb des Reduktionsmitteltanks 2 und der Filter 9 innerhalb des Reduktionsmitteltanks 2 angebracht. Durch das Verschlusselement 27 führt dabei eine kurze Saugleitung 28, die die Förderpumpe 8 mit dem Filter 9 verbindet. Dadurch kann das Reduktionsmittel 6 durch das Filter 9 und die Saugleitung 28 in die Pumpe 8 gelangen. Die Kühlwasserleitung 17 verläuft dabei eine Spirale 29 bildend, gewendelt um den Filter 9. An dem Verschlusselement 22 sind außerdem auf der nach innen weisenden Seite der Reduktionsmittel-Temperatursensor 15 und der Reduktionsmitteltank-Füllstandsensor 16 angebracht. Am Umfang des Verschlusselements 27 ist ein Dichtelement 30, beispielsweise ein O-Ring, vorgesehen. Ein Gehäuseteil 31 ist auf der nach außen weisenden Seite des Verschlusselements 27 angebracht und umgibt dabei die Förderpumpe 8, sodass diese, beispielsweise gegen Steinschlag, geschützt ist. Durch die unmittelbare Anbringung der Förderpumpe 8 an dem Reduktionsmitteltank 2 ist eine schnelle Aufwärmung beziehungsweise Auftauen der Förderpumpe 8 gewährleistet. Die Saugleitung 28 ist dabei so kurz ausgebildet, dass sie ebenfalls durch die von der durch die Kühlwasserleitung 17 gebildeten Heizung 24 vollständig aufgetaut beziehungsweise beheizt wird.

Durch die vorteilhafte Anordnung des Verschlusselements 27 am Seitenbereich 25 des Reduktionsmitteltanks 2 können elektrische Anschlussleitungen für die Förderpumpe 8 außerhalb des Reduktionsmitteltanks 2 verlegt werden, wodurch die elektrische Anbindung der Förderpumpe 8 vereinfacht wird.

In einer weiteren vorteilhaften Ausführungsform ist die Spirale 29 beziehungsweise 23 derart gebildet, dass sie als Eisschutzkäfig wirkt.

## Patentansprüche

1. Katalytische Reduktionseinrichtung für eine katalytische Reduktion von Stickoxiden in Abgasanlagen, insbesondere für Kraftfahrzeuge, mit einem Reduktionsmitteltank und einer Reduktionsmittel-Fördereinrichtung, wobei die Reduktionsmittel-Fördereinrichtung (3) zumindest teilweise im und/oder unmittelbar am Reduktionsmitteltank (2) angeordnet ist, **dadurch gekennzeichnet,**
**dass** die Reduktionsmittel-Fördereinrichtung (3) zumindest bereichsweise in einem Eisschutzkäfig (14) angeordnet ist, und
**dass** die Reduktionsmittel-Fördereinrichtung (3) von einer als Heizwendel oder Heizspirale ausgeführten Heizung (24) zumindest bereichsweise umgeben ist und
**dass** die Heizwendel beziehungsweise die Heizspirale derart gestaltet ist, dass sie den Eisschutzkäfig bildet.

2. Reduktionseinrichtung nach Anspruch 1, **dadurch gekennzeichnet, dass** die Reduktionsmittel-Fördereinrichtung (3) eine Förderpumpe (8), insbesondere eine elektrische Förderpumpe aufweist.

3. Reduktionseinrichtung nach einem der vorhergehenden Ansprüche, **dadurch gekennzeichnet, dass** die Reduktionsmittel-Fördereinrichtung (3) mindestens ein Reduktionsmittel-Filter (9) aufweist.

4. Reduktionseinrichtung nach einem der vorhergehenden Ansprüche, **dadurch gekennzeichnet, dass** das Reduktionsmittel-Filter (9) der Förderpumpe (8) vorgeschaltet oder nachgeschaltet ist.

5. Reduktionseinrichtung nach einem der vorhergehenden Ansprüche, **dadurch gekennzeichnet, dass** die Reduktionsmittel-Fördereinrichtung (3) an ein Reduktionsmittel-Leitungssystem (12) angeschlossen ist.

6. Reduktionseinrichtung nach einem der vorhergehenden Ansprüche, **dadurch gekennzeichnet, dass** das Reduktionsmittel-Leitungssystem (12) eine Reduktionsmittel-Förderleitung (11) und/oder eine Reduktionsmittel-Rückführleitung (13) aufweist.

7. Reduktionseinrichtung nach einem der vorhergehenden Ansprüche, **dadurch gekennzeichnet, dass** die Reduktionsmittel-Fördereinrichtung (3) an eine elektrische Versorgungsleitung für die Förderpumpe (8) angeschlossen ist.

8. Reduktionseinrichtung nach einem der vorhergehenden Ansprüche, **dadurch gekennzeichnet, dass** die Heizung (24) eine Kühlwasserheizung (18) einer Brennkraftmaschine des Kraftfahrzeugs ist.

9. Reduktionseinrichtung nach einem der vorhergehenden Ansprüche, **dadurch gekennzeichnet, dass** die Reduktionsmittel-Fördereinrichtung (3) an einem Verschlusselement (22;27) des Reduktionsmitteltanks (2) angeordnet ist.

10. Reduktionseinrichtung nach einem der vorhergehenden Ansprüche, **dadurch gekennzeichnet, dass** das Verschlusselement (22;27) am Kopfbereich (4) oder am Seitenbereich (25) des Reduktionsmitteltanks (2) angeordnet ist.

11. Reduktionseinrichtung nach einem der vorhergehenden Ansprüche, **dadurch gekennzeichnet, dass** das Verschlusselement (22) als Tankdeckel (21) des Reduktionsmitteltanks (2) ausgebildet ist.

12. Reduktionseinrichtung nach einem der vorhergehenden Ansprüche, **dadurch gekennzeichnet, dass** die Reduktionsmittel-Fördereinrichtung (3) einen Reduktionsmittel-Temperatursensor (15) aufweist.

13. Reduktionseinrichtung nach einem der vorhergehenden Ansprüche, **dadurch gekennzeichnet, dass** die Reduktionsmittel-Fördereinrichtung (3) einen Reduktionsmitteltank-Füllstandsensor (16) aufweist.

14. Reduktionseinrichtung nach einem der vorhergehenden Ansprüche, **dadurch gekennzeichnet, dass** die Reduktionsmittel-Fördereinrichtung (3) einen Drucksensor (32) aufweist.

15. Reduktionseinrichtung nach einem der vorhergehenden Ansprüche, **dadurch gekennzeichnet, dass** die Reduktionsmittel-Fördereinrichtung (3) als Modul ausgebildet ist.

16. Reduktionseinrichtung nach einem der vorhergehenden Ansprüche, **dadurch gekennzeichnet, dass** die Abmessungen der Reduktionsmittel-Fördereinrichtung (3) derart ausgebildet sind, dass die Reduktionsmittel-Fördereinrichtung (3) eine vom Verschlusselement (22;27) verschließbare Reduktionsmitteltank-Öffnung (5;26) zumindest teilweise passieren kann.

## Claims

1. Catalytic reduction device for a catalytic reduction of nitrogen oxides in exhaust systems, in particular for motor vehicles, having a reducing agent tank and having a reducing agent delivery device, wherein the reducing agent delivery device (3) is arranged at least partially in and/or directly on the reducing agent tank (2), **characterized**
**in that** the reducing agent delivery device (3) is arranged at least in regions in an ice protection cage (14) and
**in that** the reducing agent delivery device (3) is surrounded at least in regions by a heater (24) in the form of a heating coil or heating spiral and
**in that** the heating coil or heating spiral is designed so as to form the ice protection cage.

2. Reduction device according to Claim 1, **characterized in that** the reducing agent delivery device (3) has a delivery pump (8), in particular an electric delivery pump.

3. Reduction device according to either of the preceding claims, **characterized in that** the reducing agent delivery device (3) has at least one reducing agent filter (9).

4. Reduction device according to one of the preceding claims, **characterized in that** the reducing agent filter (9) is positioned upstream or downstream of the delivery pump (8).

5. Reduction device according to one of the preceding claims, **characterized in that** the reducing agent delivery device (3) is connected to a reducing agent line system (12).

6. Reduction device according to one of the preceding claims, **characterized in that** the reducing agent line system (12) has a reducing agent delivery line (11) and/or a reducing agent return line (13).

7. Reduction device according to one of the preceding claims, **characterized in that** the reducing agent delivery device (3) is connected to an electrical supply line for the delivery pump (8).

8. Reduction device according to one of the preceding claims, **characterized in that** the heater (24) is a cooling water heater (18) of an internal combustion engine of the motor vehicle.

9. Reduction device according to one of the preceding claims, **characterized in that** the reducing agent delivery device (3) is arranged on a closure element (22; 27) of the reducing agent tank (2).

10. Reduction device according to one of the preceding claims, **characterized in that** the closure element (22; 27) is arranged on the head region (4) or on the side region (25) of the reducing agent tank (2).

11. Reduction device according to one of the preceding claims, **characterized in that** the closure element (22) is in the form of a tank cover (21) of the reducing agent tank (2).

12. Reduction device according to one of the preceding claims, **characterized in that** the reducing agent delivery device (3) has a reducing agent temperature sensor (15).

13. Reduction device according to one of the preceding claims, **characterized in that** the reducing agent delivery device (3) has a reducing agent tank fill level sensor (16).

14. Reduction device according to one of the preceding claims, **characterized in that** the reducing agent delivery device (3) has a pressure sensor (32).

15. Reduction device according to one of the preceding claims, **characterized in that** the reducing agent delivery device (3) is in the form of a module.

16. Reduction device according to one of the preceding claims, **characterized in that** the dimensions of the reducing agent delivery device (3) are such that the reducing agent delivery device (3) can at least partially pass through a reducing agent tank opening (5; 26) which can be closed off by the closure element (22; 27).

## Revendications

1. Système de réduction catalytique réalisant la réduction catalytique d'oxydes d'azote dans les installations de gaz d'échappement, en particulier pour véhicules automobiles,
le système présentant une cuve à agent réducteur et un dispositif de transport d'agent réducteur,
le dispositif (3) de transport d'agent réducteur étant disposé au moins en partie dans et/ou directement sur la cuve (2) à agent réducteur,
**caractérisé en ce que**
le dispositif (3) de transport d'agent réducteur est disposé au moins en partie dans une cage (14) de protection contre la glace,
**en ce que** le dispositif (3) de transport d'agent réducteur est entouré au moins en partie par un chauffage (24) configuré sous la forme d'une hélice chauffante ou d'une spirale chauffante et
**en ce que** l'hélice chauffante ou la spirale chauffante sont configurées de manière à former la cage de protection contre la glace.

2. Système de réduction catalytique selon la revendication 1, **caractérisé en ce que** le dispositif (3) de transport d'agent réducteur présente une pompe refoulante (8) et en particulier une pompe refoulante électrique.

3. Système de réduction catalytique selon l'une des revendications précédentes, **caractérisé en ce que** le dispositif (3) de transport d'agent réducteur présente au moins un filtre (9) à agent réducteur.

4. Système de réduction catalytique selon l'une des revendications précédentes, **caractérisé en ce que** le filtre (9) à agent réducteur est raccordé en amont ou en aval de la pompe refoulante (8).

5. Système de réduction catalytique selon l'une des revendications précédentes, **caractérisé en ce que** le dispositif (3) de transport d'agent réducteur est raccordé à un système (12) de conduit d'agent réducteur.

6. Système de réduction catalytique selon l'une des revendications précédentes, **caractérisé en ce que** le système (12) de conduit d'agent réducteur présente un conduit (11) de transport d'agent réducteur et/ou un conduit (13) de renvoi d'agent réducteur.

7. Système de réduction catalytique selon l'une des revendications précédentes, **caractérisé en ce que** le dispositif (3) de transport d'agent réducteur est raccordé à un conduit d'alimentation électrique de la pompe refoulante (8).

8. Système de réduction catalytique selon l'une des revendications précédentes, **caractérisé en ce que** le chauffage (24) est un chauffage (18) à eau de refroidissement du moteur à combustion interne du véhicule automobile.

9. Système de réduction catalytique selon l'une des revendications précédentes, **caractérisé en ce que** le dispositif (3) de transport d'agent réducteur est disposé sur un élément (22; 27) de fermeture de la cuve (2) à agent réducteur.

10. Système de réduction catalytique selon l'une des revendications précédentes, **caractérisé en ce que** l'élément de fermeture (22; 27) est disposé au niveau de la tête (4) ou sur un côté (25) de la cuve (2) à agent réducteur.

11. Système de réduction catalytique selon l'une des revendications précédentes, **caractérisé en ce que** l'élément de fermeture (22) est configuré comme couvercle (21) de la cuve (2) à agent réducteur.

12. Système de réduction catalytique selon l'une des revendications précédentes, **caractérisé en ce que** le dispositif (3) de transport d'agent réducteur présente une sonde (15) de température de l'agent réducteur.

13. Système de réduction catalytique selon l'une des revendications précédentes, **caractérisé en ce que** le dispositif (3) de transport d'agent réducteur présente une sonde (16) de niveau de la cuve à agent réducteur.

14. Système de réduction catalytique selon l'une des revendications précédentes, **caractérisé en ce que** le dispositif (3) de transport d'agent réducteur présente une sonde de pression (32).

15. Système de réduction catalytique selon l'une des revendications précédentes, **caractérisé en ce que** le dispositif (3) de transport d'agent réducteur est configuré comme module.

16. Système de réduction catalytique selon l'une des revendications précédentes, **caractérisé en ce que** les dimensions du dispositif (3) de transport d'agent réducteur sont sélectionnées de telle sorte que le dispositif (3) de transport d'agent réducteur puisse traverser au moins en partie une ouverture (5; 26) de la cuve à agent réducteur fermée par l'élément de fermeture (22; 27).
